Europäisches Patentamt

European Patent Office

Office européen des brevets

(11) Veröffentlichungsnummer: **0 160 619**
**A2**

(12) **EUROPÄISCHE PATENTANMELDUNG**

(21) Anmeldenummer: 85810117.3

(22) Anmeldetag: 18.03.85

(51) Int. Cl.⁴: **B 65 D 77/04**
**B 65 D 77/14**

(30) Priorität: 30.04.84 CH 2111/84

(43) Veröffentlichungstag der Anmeldung:
06.11.85 Patentblatt 85/45

(84) Benannte Vertragsstaaten:
CH DE FR GB IT LI

(71) Anmelder: SIG Schweizerische Industrie-Gesellschaft

CH-8212 Neuhausen am Rheinfall(CH)

(72) Erfinder: Graf, Heinrich
Biberichweg 24
CH-8222 Beringen(CH)

(74) Vertreter: Justitz-Wormser, Daisy P., Dipl.-Chem. et al,
PATENTANWALTS-BUREAU ISLER AG Postfach 6940
Walchestrasse 23
CH-8023 Zürich(CH)

(54) Packung mit wiederverschliessbarem Kopfverschluss.

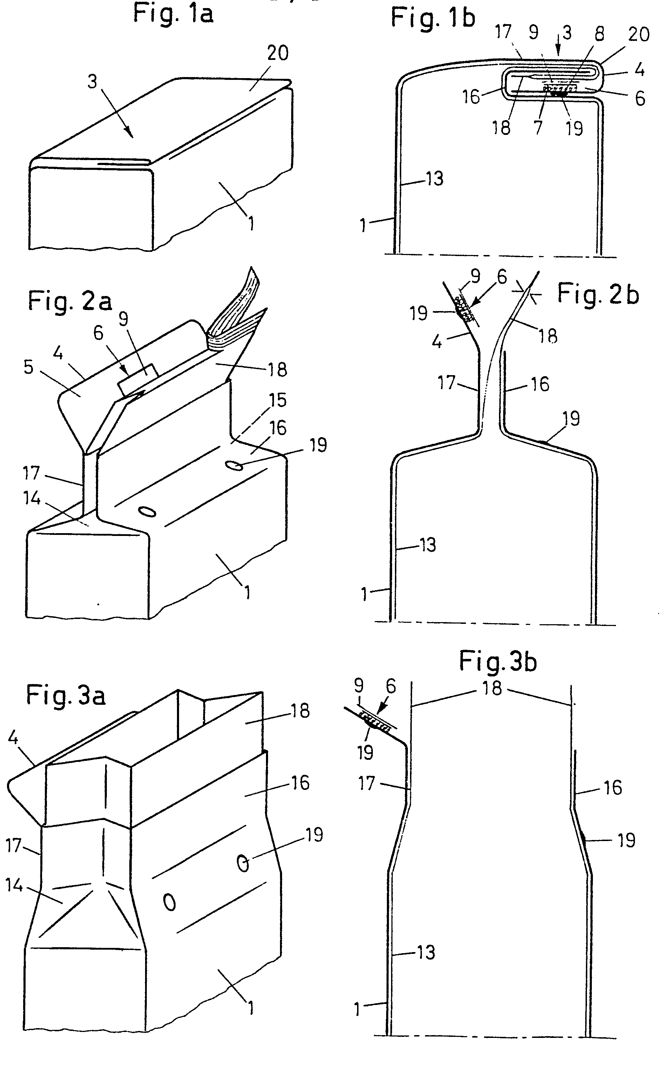

(57) Die Packung weist eine Kartonhülle (1) und einen flexiblen Innenbeutel (13) für ein Produkt auf. Der Kopfverschluss (3) besitzt einen Lappen (4), auf dem ein Klettenverschluss (6) befestigt ist. Bei der nicht angebrochenen Packung (Fig. 1b) ist ein Teilstück (7) des Klettenverschlusses (6) auf dem Lappen (4) befestigt und das Gegenstück (8) abziehbar mit dem Teilstück (7) verklettet. Auf der Rückseite des Gegenstückes ist ein Kontaktkleber aufgebracht, der mit einer Schutzfolie (9) abgedeckt ist. Der Lappen (4) ist an Klebstellen (19) mit der Hülle (1) verklebt. Beim erstmaligen Oeffnen der Packung werden die Klebstellen (19) gebrochen und bei entfaltetem Kopfverschluss (3) die Schutzfolie (9) abgezogen. Der Lappen (4) wird nun seitlich an die Hülle (1) gelegt, wodurch das Gegenstück (8) auf die Hülle (1) übertragen wird (Fig. 5b). Die Packung wird geöffnet, indem der Lappen (4) gefasst und das Teilstück (7) vom Gegenstück (8) abgezogen und der Kopfverschluss (3) entfaltet wird.

**Fig. 1b**

**Fig. 5b**

0160619

SIG Schweizerische
Industrie-Gesellschaft

---

Packung mit wiederverschliessbarem Kopfverschluss

---

Die Erfindung betrifft eine Packung nach dem Oberbegriff des unabhängigen Patentanspruches 1.

Eine Packung dieser Art ist beispielsweise durch die CH-A 595 258 bekannt geworden. Diese muss, nachdem sie einmal geöffnet wurde, recht aufwendig und zeitraubend durch teilweises Einrollen des Innenbeutels und Einlegen der Verschlussklappen wieder verschlossen werden. Die Verschlussklappen springen leicht wieder zurück, so dass die Packung undicht wird und ein empfindlicher Packungsinhalt, wie beispielsweise gemahlener Kaffee, feucht wird und Aroma verliert.

- 2 -

Es sind auch Packungen bekannt geworden, bei denen Verschlussteile selbstklebende Stellen aufweisen, mit denen der Verschluss jeweils fixiert werden kann. Klebstoffe altern jedoch schnell und werden durch Staub und Verunreinigungen unwirksam gemacht. Die klebenden Stellen erschweren auch die maschinelle Verarbeitung solcher Packungen. Ein weiterer Nachteil besteht darin, dass Klebstellen das Aussehen der Packungen beeinträchtigen können.

Die vorliegende Erfindung bezweckt, diese Nachteile zu beheben. Es stellt sich somit die Aufgabe, eine Packung der eingangs genannten Art derart auszubilden, dass diese nach dem Oeffnen wiederholt und auf einfache Weise aroma- und feuchtigkeitsdicht geschlossen werden kann. Die Packung soll grafisch gut gestaltbar sein und auch nach dem Wiederverschliessen vorteilhaft aussehen.

Die Aufgabe wird durch eine Packung mit den Merkmalen des kennzeichnenden Teils des unabhängigen Patentanspruchs 1 gelöst. Weitere vorteilhafte Ausbildungen ergeben sich aus den abhängigen Patentansprüchen.

Ein Ausführungsbeispiel der Erfindung wird nachfolgend anhand der Zeichnung näher erläutert. Es zeigen:

Fig. 1a und 1b     einen geschlossenen Kopfverschluss in Ansicht und im Schnitt,

Fig. 2a und 2b     einen teilweise geöffneten Kopfverschluss
                   in Ansicht und im Schnitt,

Fig. 3a und 3b     einen vollständig geöffneten Kopfverschluss
                   in Ansicht und im Schnitt,

Fig. 4a und 4b     einen teilweise wiederverschlossenen Kopfverschluss in Ansicht und im Schnitt,

Fig. 5a und 5b     ein vollständig wiederverschlossener Kopfverschluss in Ansicht und im Schnitt, und

Fig. 6a und 6b     ein nochmals vollständig geöffneter Kopfverschluss in Ansicht und im Schnitt.

Das hier nicht dargestellte Produkt befindet sich in einem
unter Vakuum versiegelten Beutel 13, der in einer rechteckigen Hülle 1 aus festem Material, beispielsweise Karton, angeordnet ist. Die Hülle 1 besitzt einen wiederverschliessbaren Kopfverschluss 3 mit zwei seitlichen Verschlussfaltklappen 14 und 15 sowie eine frontseitige und eine rückseitige Verschlussklappe 16 bzw. 17. Die rückseitige Verschlussklappe 17 weist einen Lappen 4 auf, der bei der noch nicht
angebrochenen Packung um 180° umgelegt ist, wobei die Doppelung 20 aus dem Lappen 4 und den Verschlussklappen 16 und 17
um 90° in eine parallel zur gegenüberliegenden Bodenfläche
verlaufende Ebene umgelegt ist. Auf der Innenfläche 5 des
Lappens 4 ist ein Klettenverschluss 6 aufgeklebt, der aus
einem Teilstück 7, beispielsweise eines Haftbandes, und einem Gegenstück 8, beispielsweise Flauschbandes, besteht.

Bei der in den Figuren 1a und 1b dargestellten Packung, die
vollständig verschlossen und nicht angebrochen ist, ist der
Klettenverschluss 6 von aussen nicht sichtbar zwischen dem
Lappen 4 und einem Endlappen 18 des Beutels 13 angeordnet.
Das Teilstück 7 ist mit einem Klebstoff auf dem Lappen 4
befestigt und das Gegenstück 8 ablösbar mit dem ersten verklettet. Auf der Rückseite 11 des Gegenstückes 8 ist eine
selbstklebende Schicht 21 aufgebracht, die mit einer Schutzfolie 9 abgedeckt ist. Auf dem Lappen 4 können mehrere Teilstücke 7 und entsprechende Gegenstücke 8 vorgesehen sein.

Der Lappen 4 ist bei der nicht angebrochenen Packung an zwei Stellen 19 mit der frontseitigen Verschlussklappe 16 verklebt.

Die noch nicht angebrochene Packung wird geöffnet, indem die Doppelung 20 gefasst und um etwa 90° nach oben geklappt wird, wobei die Klebstellen 19 gebrochen werden. Der Lappen 4 wird aufgestellt und der Beutel 13 am Endlappen 18, wie in den Fig. 2a und 2b dargestellt, aufgeschnitten. Die Packung ist nun geöffnet und bereit für eine Produktentnahme (Fig. 3a und 3b).

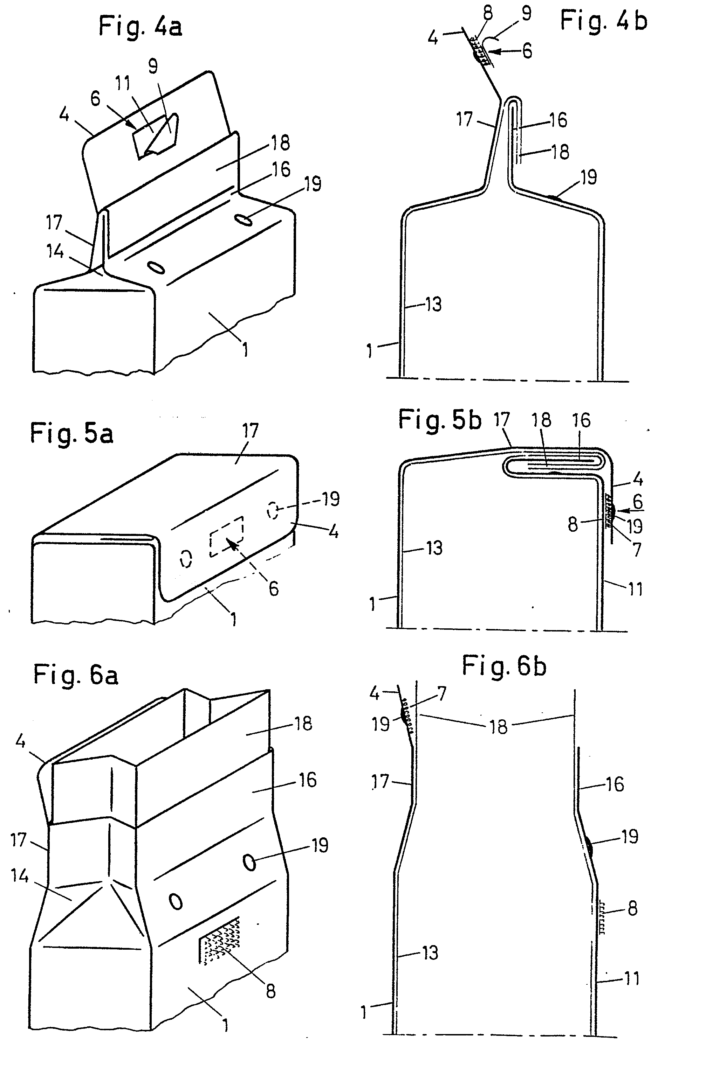

Die angebrochene Packung wird wieder verschlossen, indem die Schutzfolie 9 abgezogen (Fig. 4a und 4b) und der Lappen 4 in die in den Figuren 5a und 5b gezeigte Lage gebracht wird. Das Gegenstück 8 wird durch leichtes Andrücken des Lappens 4 auf der Rückseite 11 auf der Hülle 1 befestigt, so dass der Lappen 4 in dieser Lage fixiert ist.

Die so hergerichtete Packung kann sehr einfach geöffnet werden, indem der Lappen 4 gefasst und das Teilstück 7 von dem auf der Hülle 1 befestigten Gegenstück 8 abgezogen und der Kopfverschluss 3 entfaltet wird. Die Packung wird wieder verschlossen, indem der Kopfverschluss 3 gefaltet und der Lappen 4 an die Hülle 1 angelegt wird, wobei die beiden Klettenstücke 7 und 8 miteinander verklettet werden. Da Klettverschlüsse gegen Verschmutzung unempfindlich sind und sich wenig abnützen, kann die Packung beinahe unbeschränkt geöffnet und wieder verschlossen werden. Auf der Packung kann eine als Garantieverschluss dienende Etikette angebracht werden.

Patentansprüche

1.      Packung mit einer steifen und im wesentlichen rechteckigen Hülle (1), die einen gefalteten Kopfverschluss (3) mit einem überstehenden Lappen (4) aufweist, welcher Kopfverschluss (3) wiederholt aroma- und feuchtigkeitsdicht geschlossen und wieder geöffnet werden kann, dadurch gekennzeichnet, dass auf dem Lappen (4) ein Teilstück (7) eines Klettenverschlusses (6) befestigt ist, auf dem ein entsprechendes Gegenstück (8) abziehbar angeheftet ist, derart, dass nach dem Oeffnen des Kopfverschlusses (3) das Gegenstück (8) auf die Aussenseite der Hülle (1) übertragbar ist.

2.      Packung nach Anspruch 1, dadurch gekennzeichnet, dass die Rückseite (11) des Gegenstückes (8) mit einer selbstklebenden Schicht (12) versehen ist, die mit einer ablösbaren Schutzfolie (9) abgedeckt ist.

3.      Packung nach Anspruch 1 oder 2, dadurch gekennzeichnet, dass der Kopfverschluss (3) ein Balgverschluss mit zwei seitlichen nach innen geklappten Verschlussfaltklappen (14, 15), einer frontseitig nach innen gefalteten Verschlussklappe (16) sowie einer rückseitigen Verschlussklappe (17) ist.

4.      Packung nach Anspruch 3, dadurch gekennzeichnet, dass der Lappen (4) in die frontseitig nach innen gefaltete Verschlussklappe (16) gelegt ist.

5.      Packung nach einem der Ansprüche 1 bis 4, dadurch gekennzeichnet, dass sie einen versiegelten Beutel (13) enthält.

6.      Packung nach den Ansprüchen 4 und 5, dadurch gekennzeichnet, dass der Beutel (13) einen nach innen gefalteten Endlappen (18) aufweist.

7.      Packung nach einem der Ansprüche 1 bis 6, dadurch gekennzeichnet, dass der Kopfverschluss (3) an wenigstens einer Stelle (19) verklebt ist.

8.	Packung nach einem der Ansprüche 1 bis 7, dadurch gekennzeichnet, dass der Kopfverschluss (3) mit einer aufgeklebten Etikette niedergehalten ist.

0160619

Fig. 1a

Fig. 1b

Fig. 2a

Fig. 2b

Fig. 3a

Fig. 3b

Fig. 4a

Fig. 4b

Fig. 5a

Fig. 5b

Fig. 6a

Fig. 6b